# EUROPEAN PATENT APPLICATION

(11) **EP 2 027 778 A1**
(43) Date of publication of application: **25.02.2009**
(21) Application number: 07405180.6
(22) Date of filing: 22.06.2007
(51) Int. Cl.: A23L 1/00, A23P 1/02, A23P 1/10, A23K 1/00

(54) **Preparation of solid forms of products for the food, health, pharmaceutical, phitofarma, veterinary sectors, pesticides and fertilizers without needing to add thickening/gelling/forming ingredients by using ultrasonic vibrations**

(30) Priority: 29.05.2007 CH 8492007
(71) Applicant: Laboratories Development LLC, Miami, FL 33131 (US)
(72) Inventor: Jamati, George, Ain El Remmanen, Beirut (LB)
(74) Representative: Zardi, Marco

(57) **Abstract**

Solid forms for products for the food, health, pharmaceutical, phitofarma, veterinary sectors, pesticides and fertilizes with thickening agents available trough their extraction from the raw materials obtained using ultrasonic vibrations.

## Description

### TECHNICAL SECTOR

This invention is a method and a production system for the realisation of solid forms, easy to be handled for the food, health, pharmaceutical, phitofarma veterinary sectors, pesticides and fertilizes without need to use ballast (additives) agglomerating agents, gelling agents, glues and without the use of heating treatments or drying of eventual sugar syrups and/or starch bases used for the agglomeration of the functional raw materials.

With this invention is possible to guarantee the formation of solids of different three-dimensional solids used in the sectors above indicated based on ingredients that, without the use of agglomerating agents, gelatinizes, thickening agents could not take solid forms easy to be handled if not with deep alterations of their physical form , to a point where that they cannot be identifiable in the produced end solids.

In this way is possible realize for example food bars of dry fruits 100% fruit base or it is possible to add to the same snack bar some powder thermolable ingredients or degradable from the humidity content in the syrups of the thickening/forming additives normally used in technologies today known for the formation of solid forms.

### STATE OF THE TECHNIQUE

The actual techniques of moulding products and/or mixes of products in defined physic forms (wafers, pills, bars, moulded bars, snack), are commonly known; usually these systems are based on the use of thickening/forming ingredients like :fatty materials, or gelatinizers, thickening agents, agglomerating agents, sugar syrups added in water solutions ± concentrated, followed form a phase of physical pressure, partial and/or total drying process and eventual cut in defined forms from the final application of the obtained product

This preparation technology totally depends from the forming capacity of the added additives and many times in order to obtain a solid utilizable form, it is drastically reduced the amount of active ingredients in order to give the physical identity at the snack bar.

As above described it is evident that the technology today available does not permit the preparation of solid forms totally based on a functional ingredient without the add of thickening/forming materials and without the use of eventual compactations and drying processes that involve thermo treatments and involve water letting in quantity to request a following dehydration of the obtained mass.

Usually we can tell that there are many and different reasons to develop a new technology that permits the preparation of products in solid form to be used in the fields above indicated that permits the realisation of the products without the need to add thickening/forming additives (to have pure products that content the only functional ingredients) and to not need high pressures (to not destroy the identity of the functional ingredient) and to not need the add of water solutions with following drying processes (to not change unstable ingredients in presence of water or not stable to thermo treatments.

### DETAILED PRESENTATION OF THE INVENTION

The purpose of this invention was to cancel the problems above indicated and to realize a methodology and an apparatus set bested for the obtaining of solid forms based on functional ingredients for the above indicated fields, avoiding either thermo treatments or the use of thickening/forming additives.

The new technology studied permits the use of the only functional ingredients of the finished product and using a physic treatment they come available for the moulding of a solid structure in amorphous and/or crystalline form only on the surface of the same product, can give a proper form to the finish product.

This physic treatment is obtained at room temperature exploiting the vibration of metallic resonant elements; meaning for vibrations the ultrasonic, sonic and/or infrasonic vibrations applied to vibrant sonodroti of different forms and dimensions where are applied some ultrasounds frequencies from 10 to 40 kHz for very short time usually under one minute.

This new technology is able to create with the same functional ingredients without the add of thickening/forming additives, a structural network obtained solidifying in amorphous and/or crystalline forms the components extracted from the own ingredients used, giving in this way a proper form to the same ingredients so that it is possible to have the product handy either tobe packed or to be used subsequently from the final consumer.

This extraction and solidification is obtained principally through the application of mechanical vibrations for direct contact with the vibrant sonodroti (as above described), it is possible to operate in conditions with controlled humidity and speed up and/or reduce this proces using the natural humidity of the functional ingredients used or add extra humidity with a maximum limit of 30% of moisture.

In this structure obtained with this technology is possible introduce different functional ingredients that for their nature or constitution could not normally assume theirs own forms handily or usable if not obtained through the normal add of additives, gelatinizer or sugar syrups and/or starch base that normally can be followed from a dry process phase.

In order to evaluate the efficacy of the new technology and relative apparatus, we have prepared some solid forms for the food and health industry that automatically can reproduce the conditions operative for the other sector already listed.

### Preparation methodology of the products:

if the ingredient is based on a single ingredient or multi ingredients, is made an easy mixing operation in order to assure the homogeneity of the treated product through a doser is deposited the quantity of product (or mix of ingredients) in the mould with the dimensions of the finished desired product, we place the sonodroto having the same upper shape of the mould and we apply at room temperature the ultrasound vibrations at the fixed frequency pre- calculated, after the desiderate vibration time it is lift up the sonodroto and the solid form obtained is discharged from the mould (see parameters before indicated).

Example 1 is a food bar obtained at room temperature with the application of mechanical vibrations at 20 kHz for 12 seconds using a rectangular sonodroto in titanium on a compound of dry apples 90% and apple juice 10% without the add of any material and/or thickening/forming ingredient and without any further dry process.

Example 2: a food bar was obtained at room temperature with the application of mechanical vibrations at 20 kHz for 12 seconds using a cylindrical sonodroto in titanium on a compound of dry apples 100% without the add of any material and/or thickening/forming ingredient and without any further dry process.

Example 3: a food bar was obtained at room temperature with the application of mechanical vibrations at 20 kHz for 15 seconds using a cylindrical sonodroto in titanium on a compound of dry fruit 30%, puffed rice 50%, powder fructose 20% without the add of any material and/or thickening/forming ingredient and without any further dry process.

Example 4: a food bar was obtained at room temperature with the application of mechanical vibrations at 20 kHz for 15 seconds using a cylindrical sonodroto in titanium on a compound of dry fruit 30%, puffed rice 50%, breakfast cereals 15%, milk proteins in powder 4%, calcium salts 0.5%, amino-acids 0.3%, ascorbic acid 0.2%, without the add of any material and/or thickening/forming ingredient and without any further dry process.

Example 5: a food bar for pet food was obtained at room temperature with the application of mechanical vibrations at 20 kHz for 12 seconds using a rectangular sonodroto in titanium on a compound of cereals for animals in grain and dry vegetables 89%, meat proteins in powder 9%, flavours 1%, calcium salts 1%, without the add of any material and/or thickening/forming ingredient and without any further dry process.

Example 6: a pill of food products was bar was obtained at room temperature with the application of mechanical vibrations at 20 kHz for 15 seconds using a cylindrical sonodroto in titanium on a compound of starch 50%, cocoa powder 30%, sugar 10%, milk proteins 10%, without the add of any material and/or thickening/forming ingredient and without any further dry process.

The examples above indicated are supplied for illustrative purposes and they cannot be absolutely limitative for the applicative fields of this invention either in their forms or in their recipes because it is easily understanding from everybody expert in the filed of invention that it is possible use every other ingredient or medicament or different substances usually used in the above indicated fields and/or every other forms of the vibrating metallic unit to obtain solid products with form and desired composition.
So, it is not necessary to underline that these further variable modifications enter fully in the invention field as above described so they have not to be considered as limits of the claims under indicated.

## Claims

1. Apparatus for the preparation of solid forms for the food, health food, pharmaceutical, phitofarma, veterinary sectors, pesticides and fertilizes; without needing to add thickening materials, gelatinizer, agglomerating agents based also on one only functional ingredient and obtained without the necessity of drying process and/or other heat treatments or of concentration but only through treatment with mechanical vibrations meaning with mechanical vibrations the ultrasonic, sonic, and/or infrasonic vibrations, applied to vibrant metallic sonodroti of different forms and dimensions where are applied some ultrasonic frequencies from 10 to 40 kHz for very short time, normally under one minute.

2. Productive apparatus **characterised** from vibrant, metallic, vibrant elements with ultrasound sonodroti appropriately shaped to realize the desired forms.
The methodology indicated in the claim (1) includes the phases of:
- Dosage of the ingredient or of the mix of the ingredient constituting the product to be formed in the prepared mould- through proper dosing system
- Descent of the vibrant element with right form adaptable to the mould desired
- Transmission of mechanical vibrations 10-40 Khz (ultrasonic, sonic, infrasonic) to the product for the due time, normally under one minute
- Lifting of the vibrant unit and discharge of the solid form obtained from the mould trough a right mechanical movement.
